(19) Europäisches Patentamt / European Patent Office / Office européen des brevets

(11) **EP 2 577 013 B1**

(12) **EUROPEAN PATENT SPECIFICATION**

(45) Date of publication and mention
of the grant of the patent:
**25.10.2017 Bulletin 2017/43**

(51) Int Cl.:
*F01N 11/00* (2006.01)     *F01N 3/025* (2006.01)
*F01N 3/035* (2006.01)     *F01N 3/10* (2006.01)
*F02D 41/22* (2006.01)     *F02D 41/14* (2006.01)
*F02D 41/24* (2006.01)

(21) Application number: **11786986.7**

(22) Date of filing: **11.05.2011**

(86) International application number:
**PCT/SE2011/050595**

(87) International publication number:
**WO 2011/149410 (01.12.2011 Gazette 2011/48)**

(54) **METHOD AND SYSTEM FOR ADAPTATION OF AN ELECTROCHEMICAL GAS SENSOR**

VERFAHREN UND SYSTEM ZUR ANPASSUNG EINES ELEKTROCHEMISCHEN GASSENSORS

PROCÉDÉ ET SYSTÈME D'ADAPTATION D'UN CAPTEUR DE GAZ ÉLECTROCHIMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2010 SE 1050533**

(43) Date of publication of application:
**10.04.2013 Bulletin 2013/15**

(73) Proprietor: **Scania CV AB (publ)
151 87 Södertälje (SE)**

(72) Inventor: **STENLÅÅS, Ola
S-151 48 Södertälje (SE)**

(74) Representative: **Scania CV AB
Patents, GP 117kv
151 87 Södertälje (SE)**

(56) References cited:
**EP-A2- 1 365 234         WO-A1-2004/109072
WO-A1-2007/073324    WO-A1-2009/040293
DE-A1-102007 045 080    FR-A1- 2 844 880
US-A- 5 291 673          US-A1- 2002 060 150
US-A1- 2004 000 493    US-A1- 2008 128 277
US-B1- 6 409 969**

**Description**

FIELD OF THE INVENTION AND PRIOR ART

The present invention relates to a method and a system for adaptation of an electrochemical gas sensor which is situated in an exhaust line from a combustion engine and is of a conventional kind with

- a measuring chamber for receiving an amount of the exhaust gases which pass through the exhaust line,
- measurement means for generating a measurement signal which depends on the concentration of a specific gas in said amount of exhaust gases and is converted by means of a signal processing algorithm to a value which represents the concentration of said gas in the exhaust gases, and
- temperature regulating means by which the temperature of said amount of exhaust gases can be regulated.

The invention relates also to a computer programme product comprising computer programme code for implementing a method according to the invention, and an electronic control unit.

To be able to control a combustion engine and various kinds of exhaust post-treatment devices in an effective and environmentally friendly way, it may be important to be able to measure with good accuracy the concentration of certain gases in the exhaust gases which pass through the engine's exhaust line. This may for example be done by means of an electrochemical gas sensor of the kind indicated above. Such a sensor may for example be configured to measure the concentration of $NO_x$, $O_2$, $NH_3$ or CO in the exhaust gases. Document EP 1 365 234 A shows an example of such a sensor. A problem with such a sensor is that it is sensitive to ageing, which means that the measurement signal generated by it drifts over time. Compensating for this drift entails regular corrections of the signal processing algorithm used for converting the sensor's measurement signal to a value which represents the concentration of the relevant gas in the exhaust gases, so that this concentration value is caused to correspond better to the actual concentration of the relevant gas in the exhaust gases. In this description and the claims set out below, the term used for such correction is adaptation. The adaptation of an electrochemical gas sensor in an exhaust line from a combustion engine may be effected by comparing a measured value determined by the sensor for the concentration of a gas in the exhaust gases with a given gas concentration at a predetermined engine operating point. A problem with this known adaptation method is that the given gas concentration is liable to errors which result in poor accuracy in the adaptation of the sensor. It is difficult in particular to identify an engine operating point which always results in a given and stable concentration of the gas measured by the sensor.

OBJECT OF THE INVENTION

The object of the present invention is to propose a novel and advantageous way of adapting an electrochemical gas sensor which is intended to measure the concentration of a gas in the exhaust gases from a combustion engine.

SUMMARY OF THE INVENTION

According to the present invention, said object is achieved by a method having the features defined in claim 1 and a system having the features defined in claim 5.

According to the invention, sets of measured values are recorded at three or more different times during a period when the operating conditions of the engine are such that the composition of the exhaust gases released by it is maintained substantially unchanged, and each set of measured values comprises a first value corresponding to the magnitude of the sensor's measurement signal at the respective time, and a second measured value corresponding to the temperature at the respective time of the amount of exhaust gases received in the sensor's measuring chamber. A temperature regulating means of the sensor is controlled in such a way that the temperature of said amount of exhaust gases is different at the time of each recording during the relevant period. The values in said sets of measured values and relationships between these values which arise from the general gas law serve as a basis for determining a value for one or more constants which form part of the signal processing algorithm used for converting the sensor's measurement signal to a value which represents the concentration of a specific gas in the exhaust gases. The sensor is thereafter adapted by adjustment of the signal processing algorithm according to the value determined for each constant.

As mentioned above, it is difficult to identify an engine operating point which always results in a given and stable concentration of the gas measured by a sensor in an exhaust line from a combustion engine. It is nevertheless relatively easy to identify an engine operating point which results in exhaust gases with a composition which is stable, i.e. not changing substantially over time, but is unknown. According to the general gas law, the concentration, but not the composition, of an ideal gas changes when its temperature changes while its pressure and volume are kept constant. If the pressure of the gases in the exhaust line is kept constant, the pressure in the sensor's measuring chamber also remains constant. Moreover, the measuring chamber has a constant volume. Altering the temperature of the exhaust gases received in sensor's measuring chamber while their pressure is kept constant thus makes it possible to achieve a change in their total concentration without affecting their composition, with the consequence that the gas concentration detected by the sensor changes when such a temperature change occurs. This fact and relationships which arise from the general gas law make it possible according to the invention to effect with good accuracy an adaptation of the sensor here concerned.

Other advantageous features of the method and the system according to the invention are indicated by the independent claims and the description set out below.

The invention relates also to a computer programme product having the features defined in claim 7 and an electronic control unit having the features defined in claim 9.

BRIEF DESCRIPTION OF THE DRAWINGS

The invention is described in more detail below on the basis of embodiment examples with reference to the attached drawings, in which:

Fig. 1     is a schematic diagram of a combustion engine with associated exhaust line,

Fig. 2     is a schematic diagram of an electrochemical gas sensor,

Fig. 3     is a schematic diagram of an electronic control unit for implementing a method according to the invention, and

Fig. 4     is a flowchart illustrating a method according to an embodiment of the invention.

DETAILED DESCRIPTION OF EMBODIMENTS OF THE INVENTION

The invention is described below with reference to a motor vehicle. The invention is nevertheless not confined to that context but may also be relevant in all contexts where an electrochemical gas sensor is provided to measure the concentration of a specific gas in the exhaust gases from a combustion engine, e.g. in a watercraft or at a power station.

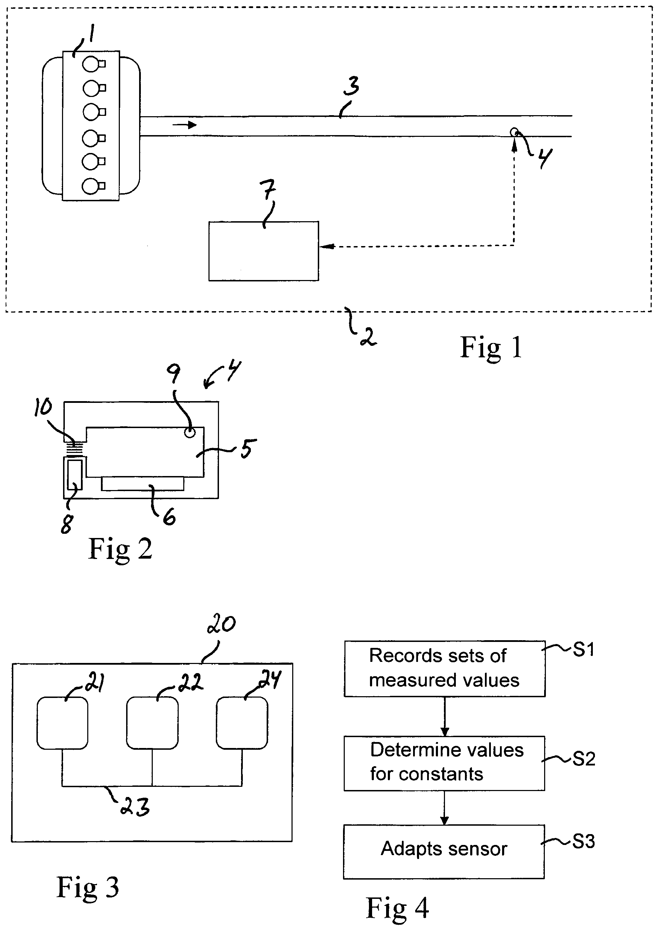

Fig. 1 depicts schematically a combustion engine 1 of a motor vehicle 2. The exhaust gases leaving the engine 1 move through an exhaust line 3 and pass out into the surroundings via an exhaust outlet. An electrochemical gas sensor 4 is provided in the exhaust line 3 to measure the concentration of a specific gas in the gases which flow through the exhaust line. One or more exhaust post-treatment devices (not depicted in Fig. 1), e.g. in the form of one or more catalysts and/or one or more particle filters, may be provided in the exhaust line 3 upstream and/or downstream of the gas sensor 4.

The sensor 4 may for example be configured to measure the concentration of NO, $NO_2$, $N_2O$, $O_2$, $NH_3$ or CO in the exhaust gases.

The sensor 4 is of a conventional type and comprises a measuring chamber 5 for receiving an amount of the exhaust gases which pass through the exhaust line 3. The sensor 4 further comprises measuring means 6 of a conventional type for generating a measurement signal S which depends on the concentration of a specific gas, e.g. NO, $NO_2$, $N_2O$, $O_2$, $NH_3$ or CO in the amount of exhaust gases received in the measuring chamber 5. This measuring means 6 is schematically illustrated in Fig. 2. An electronic control device 7 is connected to said measuring means 6 in order to receive said measurement signal from it. This control device 7 is arranged to use a signal processing algorithm to convert the measurement signal received to a value which represents the concentration of the relevant gas in the exhaust gases. The sensor 4 is also provided with temperature regulating means 8 of a conventional type which can be used to regulate the temperature of the amount of exhaust gases received in the measuring chamber 5. Such a temperature regulating means 8 is schematically illustrated in Fig. 2. The temperature in the measuring chamber 5 is measurable by a temperature detection means 9 of the gas sensor 4. The control device 7 is connected to this temperature detection means 9 in order to receive measured values from it of the temperature T of the amount of exhaust gases received in the measuring chamber 5.

In the embodiment illustrated in Fig. 2, the sensor 4 has a diffusion lock 10 via which exhaust gases can flow from the exhaust line 3 into the sensor's measuring chamber 5. The temperature regulating means 8 may for example be arranged to regulate in a conventional way the temperature in the diffusion lock 10 in order thereby to regulate the temperature of the amount of exhaust gases received in the measuring chamber 5.

The sensor 4 might alternatively be configured in some other conventional way than that illustrated in Fig. 2. It might for example comprise a further chamber through which the exhaust gases pass before they reach the measuring chamber and which is connected to the measuring chamber via a diffusion lock. In that case the sensor might be provided with a further diffusion lock via which exhaust gases might flow from the exhaust line into said further chamber, making it possible to use said temperature regulating means to regulate the temperature of one or both of these two diffusion locks and thereby regulate the temperature of the amount of exhaust gases received in the measuring chamber.

The control device 7 is arranged to record sets of measured values at three or more different times during a period when the operating conditions of the engine 1 are such that the composition of the exhaust gases leaving it is maintained substantially unchanged. These may be given operating conditions which have already been found to result in stable exhaust gas composition. Alternatively, the control device 7 might be arranged to determine when the prevailing operating conditions result in stable exhaust gas composition, by analysis of measured values from one or more gas sensors situated in the exhaust line 3.

Each of said sets of measured values comprises a first value $S_i$ corresponding to the magnitude of the measurement signal of the sensor 4 at the time of the respective recording, and a second value $T_i$ corresponding to the temperature, measured by the sensor's temperature detection means 9, of the amount of exhaust gases received in the sensor's measuring chamber 5 at the time of the respective recording. The recording of these sets of measured values entails the control device 7 being arranged to control the sensor's temperature regulating means 8 in such a way that the temperature of the amount of exhaust gases received in the measuring chamber 5 is different at the time of each recording during the relevant period.

The control device 7 is arranged to determine a value for one or more constants which form part of the aforesaid signal processing algorithm, on the basis of the values $S_i$, $T_i$ in said sets of measured values and in the light of relationships between these values which arise from the general gas law. The control device 7 is thereafter arranged to adapt the sensor 4 by adjusting the signal processing algorithm according to the value determined for each constant.

According to the general gas law,

$$P \cdot V = n \cdot R \cdot T \qquad (1)$$

in which P is the pressure of the gas in N m$^{-2}$, V the volume of the gas in m$^3$, n the substance amount of the gas in mol, R the general gas constant (8.3145 J mol$^{-1}$ K$^{-1}$) and T the temperature of the gas in kelvin.

From the general gas law it follows that

$$\frac{n}{V} = \frac{P}{R \cdot T} \qquad (2)$$

The total concentration $C_{Tot}$ of the amount of exhaust gases received in the sensor's measuring chamber 5 is given by the formula

$$C_{Tot} = \frac{n}{V} \qquad (3)$$

in which n is the total substance amount of the amount of exhaust gases received in the measuring chamber 5 and V represents the volume of the measuring chamber.

From equations (2) and (3) it follows that

$$C_{Tot} = \frac{P}{R \cdot T} \qquad (4)$$

The relationship between the concentration $C_A$ measured by the gas sensor 4 and the aforesaid total concentration $C_{Tot}$ is

$$C_A = X_A \cdot C_{Tot} \qquad (5)$$

in which $X_A$ is the mole fraction for the specific gas whose concentration the gas sensor 4 is arranged to measure.

From equations (4) and (5) it follows that

$$C_A = \frac{X_A \cdot P}{R \cdot T} \qquad (6)$$

If the temperature T of the amount of exhaust gases received in the measuring chamber 5 changes while the pressure P and composition of the exhaust gases, and hence the mole fraction $X_A$, remain unchanged, the equation (6) results in the relationship

$$\frac{C_{A1}}{C_{A2}} = \frac{T_2}{T_1} \qquad (7)$$

in which $C_{A1}$ is the concentration of the relevant gas at the temperature $T_1$, and $C_{A2}$ the concentration of the relevant gas at the temperature $T_2$.

An embodiment of the adaptation method according to the invention is described below in more detail with reference to a case where the aforesaid signal processing algorithm is an algorithm for linear matching, i.e. an algorithm of the appearance

$$S \cdot K + L = C_A \qquad (8)$$

in which S is the measurement signal from the sensor 4, K a constant in the form of a so-called amplification factor, L a constant in the form of a so-called offset and $C_A$ the concentration of the relevant gas.

In this case, sets of measured values are recorded at three different times during a period when the operating conditions of the engine 1 are such that the composition of the exhaust gases released by it is maintained substantially unchanged. The values $S_1$, $T_1$ in the first set of measured values represent the sensor's measurement signal and the temperature in the sensor's measuring chamber 5 at the time of the first recording, and the values $S_2$, $T_2$ in the second set of measured values and $S_3$, $T_3$ in the third set of measured values represent corresponding measurement signals and temperatures at the respective times of the second and third recordings.

The following equation system is arrived at on the basis of equations (7) and (8) and the three sets of measured values:

$$\begin{cases} (S_1 - S_2) \cdot K = C_{A1} - C_{A2} \\ (S_2 - S_3) \cdot K = C_{A2} - C_{A3} \\ \dfrac{C_{A1}}{C_{A2}} = \dfrac{T_2}{T_1} \\ \dfrac{C_{A2}}{C_{A3}} = \dfrac{T_3}{T_2} \end{cases} \qquad (9)\text{-}(12)$$

This equation system (9)-(12) has four unknowns K, $C_{A1}$, $C_{A2}$ and $C_{A3}$ and comprises four equations, which means that the amplification factor K can be resolved. This equation system can therefore be used to determine a value for the signal processing algorithm's amplification factor K. The sensor 4 can then be adapted by causing the algorithm's amplification factor K to assume the value thus determined. If the sensor 4 is zero-point adapted, the algorithm's aforesaid offset L is also known.

In cases where the signal processing algorithm is an algorithm for non-linear or multi-linear matching, more sets of measured values are required and the equation system becomes more extensive.

The control device 7 may comprise a single electronic control unit as illustrated in Fig. 1, or two or more mutually cooperating electronic control units.

Fig. 4 is a flowchart illustrating an embodiment of a method according to the present invention for adaptation of an electrochemical gas sensor 4 of the type indicated above which is situated in an exhaust line 3 from a combustion engine 1.

As a first step S1, sets of measured values are recorded at three or more different times during a period when the operating conditions of the engine 1 are such that the composition of the exhaust gases released by it is maintained substantially unchanged, each of which sets of measured values comprises a first value $S_1$ corresponding to the magnitude of the sensor's measurement signal at the time of the respective recording, and a second value $T_1$ corresponding to the temperature of the amount of exhaust gases received in the sensor's measuring chamber 5 at the time of the respective recording. During that period, the sensor's temperature regulating means 8 is controlled in such a way that the temperature of said amount of exhaust gases is different at the time of each recording.

As a second step S2, on the basis of the values $S_i$, $T_i$ in said sets of measured values and in the light of relationships between these values which arise from the general gas law, a value is determined for one or more constants which form part of the signal processing algorithm used for converting the sensor's measurement signal S to a value which represents the concentration of a specific gas in the exhaust gases.

As a third step S3, the gas sensor 4 is adapted by adjustment of the signal processing algorithm according to the value determined for each constant.

Computer programme code for implementing a method according to the invention is with advantage included in a computer programme which can be read into the internal memory of a computer, e.g. the internal memory of an electronic control unit of a motor vehicle. Such a computer programme is with advantage provided via a computer programme product comprising a data storage medium which can be read by an electronic control unit and has the computer programme stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

A computer programme according to an embodiment of the invention comprises computer programme code for causing an electronic control device 7:

- to record sets of measured values at three or more different times during a period when the operating conditions of the engine 1 are such that the composition of the exhaust gases released by it is maintained substantially unchanged, each of which sets of measured values comprises a first value $S_1$ corresponding to the magnitude of the sensor's measurement signal at the time of the respective recording, and a second value $T_1$ corresponding to the temperature of the amount of exhaust gases received in the sensor's measuring chamber 5 at the time of the respective recording,
- to control the sensor's temperature regulating means 8 in such a way that the temperature of said amount of exhaust gases is different at the time of each recording during the relevant period,
- to determine, on the basis of the values $S_i$, $T_i$ in said sets of measured values and in the light of relationships between these values which arise from the general gas law, a value for one or more constants which form part of the signal processing algorithm used for converting the sensor's measurement signal S to a value which represents the concentration of a specific gas in the exhaust gases, and
- to adapt the gas sensor 4 by adjustment of the signal processing algorithm according to the value determined for each constant.

Fig. 3 illustrates very schematically an electronic control unit 20 comprising an execution means 21, e.g. a central processor unit (CPU), for execution of computer software. The execution means 21 communicates with a memory 22, e.g. of the RAM type, via a data bus 23. The control unit 20 comprises also a data storage medium 24 e.g. in the form of a flash memory or a memory of the ROM, PROM, EPROM or EEPROM type. The execution means 21 communicates with the data storage medium 24 via the data bus 23. A computer programme comprising computer programme code for implementing a method according to the invention, e.g. in accordance with the embodiment illustrated in Fig. 4, is stored on the data storage medium 24.

The invention is of course in no way confined to the embodiments described above, since various possibilities for modifications thereof are likely to be obvious to a specialist in the field without thereby having to deviate from the invention's basic concept defined in the attached claims.

## Claims

1. A method for adaptation of an electrochemical gas sensor (4) which is situated in an exhaust line (3) from a combustion engine (1) and comprises

   • a measuring chamber (5) for receiving an amount of the exhaust gases which pass through the exhaust line,
   • measurement means (6) for generating a measurement signal which depends on the concentration of a specific gas in said amount of exhaust gases and is converted by means of a signal processing algorithm to a value which represents the concentration of said gas in the exhaust gases, and
   • a temperature regulating means (8) by which the temperature of said amount of exhaust gases can be regulated,

**characterised**

- **in that** sets of measured values are recorded at three or more different times during a period when the operating conditions of the engine (1) are such that the composition of the exhaust gases released by it is maintained substantially unchanged, each of which sets of measured values comprises a first value ($S_1$) corresponding to the magnitude of said measurement signal at the time of the respective recording, and a second value ($T_1$) corresponding to the temperature of the amount of exhaust gases at the time of the respective recording,
- that said temperature regulating means (8) is controlled in such a way that the temperature of said amount of exhaust gases is different at the time of each recording during the relevant period,
- that a value for one or more constants which form part of the signal processing algorithm is determined on the basis of the values ($S_i$, $T_i$) in said sets of measured values and in the light of relationships between these values which arise from the general gas law, and
- that the gas sensor (4) is adapted by adjustment of the signal processing algorithm according to the value determined for each constant.

2. A method according to claim 1, in which the gas sensor (4) has at least one diffusion lock (10) through which said amount of exhaust gases passes before it reaches the measuring chamber (5), **characterised in that** the temperature of said amount of exhaust gases is regulated by said temperature regulating means (8) regulating the temperature in one or more diffusion locks of the gas sensor (4).

3. A method according to claim 1 or 2, in which the signal processing algorithm is an algorithm for linear matching which has an amplification factor (K), **characterised**

- **in that** a value for said amplification factor (K) is determined on the basis of the values ($S_i$, $T_i$) in said sets of measured values and in the light of the relationship between the measured values which is indicated by the general gas law,
- and that the gas sensor (4) is adapted by the signal processing algorithm's amplification factor (K) being caused to assume said value determined.

4. A method according to any one of claims 1-3, **characterised in that** the gas sensor (4) is a sensor which measures the concentration of $NO$, $NO_2$, $N_2O$, $O_2$, $NH_3$ or $CO$.

5. A system for adaptation of an electrochemical gas sensor (4) which is situated in an exhaust line from a combustion engine and comprises

• a measuring chamber (5) for receiving an amount of the exhaust gases which pass through the exhaust line,
• measurement means (6) for generating a measurement signal which depends on the concentration of a specific gas in said amount of exhaust gases and is converted by means of a signal processing algorithm to a value which represents the concentration of said gas in the exhaust gases, and
• a temperature regulating means (8) by which the temperature of said amount of exhaust gases can be regulated,

**characterised in that** the system comprises an electronic control device (7) which is arranged:

- to record sets of measured values at three or more different times during a period when the operating conditions of the engine (1) are such that the composition of the exhaust gases released by it is maintained substantially unchanged, each of which sets of measured values comprises a first value ($S_1$) corresponding to the magnitude of said measurement signal at the time of the respective recording, and a second value ($T_1$) corresponding to the temperature of the amount of exhaust gases at the time of the respective recording,
- to control said temperature regulating means (8) in such a way that the temperature of said amount of exhaust gases is different at the time of each recording during the relevant period,
- to determine a value for one or more constants which form part of the signal processing algorithm on the basis of the values ($S_i$, $T_i$) in said sets of measured values and in the light of relationships between these values which arise from the general gas law, and
- to adapt the gas sensor (4) by adjustment of the signal processing algorithm according to the value determined for each constant.

6. A system according to claim 5, in which the signal processing algorithm is an algorithm for linear matching which has an amplification factor (K), **characterised**

- **in that** the control device (7) is arranged to determine a value for said amplification factor (K) on the basis of the values ($S_i$, $T_i$) in said sets of measured values and in the light of relationships between these values which arise from the general gas law,
- and that the control device (7) is arranged to adapt the gas sensor (4) by the signal processing algorithm's amplification factor (K) being caused to assume said value determined.

7. A computer programme product for adaptation of an electrochemical gas sensor (4) which is situated in an exhaust line (3) from a combustion engine (1) and comprises:

 • a measuring chamber (5) for receiving an amount of the exhaust gases which pass through the exhaust line,
 • measurement means (6) for generating a measurement signal which depends on the concentration of a specific gas in said amount of exhaust gases and is converted by means of a signal processing algorithm to a value which represents the concentration of said gas in the exhaust gases, and
 • a temperature regulating means (8) by which the temperature of said amount of exhaust gases can be regulated,

which computer programme product comprises computer programme code for causing an electronic control device (7):

 - to record sets of measured values at three or more different times during a period when the operating conditions of the engine (1) are such that the composition of the exhaust gases released by it is maintained substantially unchanged, each of which sets of measured values comprises a first value ($S_1$) corresponding to the magnitude of said measurement signal at the time of the respective recording, and a second value ($T_1$) corresponding to the temperature of the amount of exhaust gases at the time of the respective recording,
 - to control said temperature regulating means (8) in such a way that the temperature of said amount of exhaust gases is different at the time of each recording during the relevant period,
 - to determine a value for one or more constants which form part of the signal processing algorithm, on the basis of the values ($S_i$, $T_i$) in said sets of measured values and in the light of relationships between these values which arise from the general gas law, and
 - to adapt the gas sensor (4) by adjustment of the signal processing algorithm according to the value determined for each constant.

8. A computer programme product according to claim 7, **characterised in that** the computer programme product comprises a data storage medium which can be read by an electronic control unit and which has said computer programme code stored on it.

9. An electronic control unit for a motor vehicle, comprising an execution means (21), a memory (22) connected to the execution means and a data storage medium (24) which is connected to the execution means and has the computer programme code of a computer programme product according to claim 7 stored on it.

**Patentansprüche**

1. Verfahren zum Anpassen eines elektrochemischen Gassensors (4), der sich in einer Abgasleitung (3) von einem Verbrennungsmotor (1) befindet, und der aufweist:

 • eine Messkammer (5) zur Aufnahme einer Menge der die Abgasleitung passierenden Abgase,
 • Messmittel (6) zum Erzeugen eines Messsignals, das von der Konzentration eines spezifischen Gases in der Menge der Abgase abhängt, und das mittels eines Signalverarbeitungsalgorithmus zu einem Wert gewandelt wird, der die Konzentration des Gases in den Abgasen repräsentiert, und
 • ein Temperaturregelungsmittel (8), mit dem die Temperatur der Menge der Abgase geregelt werden kann

**dadurch gekennzeichnet, dass**

 - Meßwertsätze zu drei oder mehr verschiedenen Zeitpunkten während einer Periode aufgezeichnet werden, in der die Betriebsbedingungen des Verbrennungsmotors (1) so sind, dass die Zusammensetzung der von ihm freigesetzten Abgase im Wesentlichen unverändert bleibt, wobei jeder Messwertsatz einen ersten Wert ($S_1$) entsprechend der Stärke des Messsignals zum Zeitpunkt der jeweiligen Aufzeichnung und einen zweiten Wert ($T_1$) entsprechend der Temperatur der Menge der Abgase zum Zeitpunkt der jeweiligen Aufzeichnung aufweist,

- das Temperaturregelungsmittel (8) so gesteuert wird, dass die Temperatur der Menge der Abgase zum Zeitpunkt jeder Aufzeichnung während der relevanten Periode unterschiedlich ist,

- ein Wert für eine oder mehrere Konstante, die Teil des Signalverarbeitungsalgorithmus bilden, auf Basis der Werte ($S_1$, $T_1$) der Messwertsätze und angesichts von Beziehungen zwischen diesen Werten, die sich aus dem allgemeinen Gasgesetz ergeben, bestimmt wird, und

- der Gassensor (4) durch Anpassen des Signalverarbeitungsalgorithmus gemäß dem für jede Konstante bestimmten Wert angepasst wird.

2. Verfahren nach Anspruch 1, wobei der Gassensor (4) mindestens eine Diffusionsschleuse (10) hat, die die Menge der Abgase passiert, bevor sie die Messkammer (5) erreicht, **dadurch gekennzeichnet, dass** die Temperatur der Menge der Abgase von dem Temperaturregelungsmittel (8) geregelt wird, das die Temperatur in einer oder in mehreren Diffusionsschleusen des Gassensors (4) regelt.

3. Verfahren nach Anspruch 1 oder 2, bei dem der Signalverarbeitungsalgorithmus ein Algorithmus mit einem Verstärkungsfaktor (K) zur linearen Anpassung ist, **dadurch gekennzeichnet, dass**

- ein Wert für den Verstärkungsfaktor (K) auf Basis der Werte ($S_1$, $T_1$) der Messwertsätze und angesichts der Beziehung zwischen den Messwerten, die durch das allgemeine Gasgesetz gegeben ist, bestimmt wird,

- der Gassensor (4) durch den Verstärkungsfaktor (K) des Signalverarbeitungsalgorithmus, der zur Annahme des bestimmten Wertes veranlasst wird, angepasst wird.

4. Verfahren nach einem der Ansprüche 1 bis 3, **dadurch gekennzeichnet, dass** der Gassensor (4) ein Sensor ist, der die Konzentration von NO, $NO_2$, $N_2O$, $O_2$, $NH_3$ oder CO misst.

5. System zum Anpassen eines elektrochemischen Gassensors (4), der sich in einer Abgasleitung (3) von einem Verbrennungsmotor befindet und aufweist:

• eine Messkammer (5) zur Aufnahme einer Menge der die Abgasleitung passierenden Abgase,

• Messmittel (6) zum Erzeugen eines Messsignals, das von der Konzentration eines spezifischen Gases in der Menge der Abgase abhängt, und das mittels eines Signalverarbeitungsalgorithmus zu einem Wert gewandelt wird, der die Konzentration des Gases in den Abgasen repräsentiert, und

• ein Temperaturregelungsmittel (8), mit dem die Temperatur der Menge der Abgase geregelt werden kann,

**dadurch gekennzeichnet, dass** das System ein elektronisches Steuergerät aufweist, das eingerichtet ist zum:

- Aufzeichnen von Meßwertsätzen zu drei oder mehr verschiedenen Zeitpunkten während einer Periode, in der die Betriebsbedingungen des Verbrennungsmotors (1) so sind, dass die Zusammensetzung der von ihm freigesetzten Abgase im Wesentlichen unverändert bleibt, wobei jeder Messwertsatz einen ersten Wert ($S_1$) entsprechend der Stärke des Messsignals zum Zeitpunkt der jeweiligen Aufzeichnung und einen zweiten Wert ($T_1$) entsprechend der Temperatur der Menge der Abgase zum Zeitpunkt der jeweiligen Aufzeichnung aufweist,

- Steuern des Temperaturregelungsmittels (8) auf eine solche Weise, dass die Temperatur der Menge der Abgase zum Zeitpunkt jeder Aufzeichnung während der relevanten Periode unterschiedlich ist,

- Bestimmen eines Wertes für eine oder mehrere Konstante, die Teil des Signalverarbeitungsalgorithmus bilden, auf Basis der Werte ($S_1$, $T_1$) der Messwertsätze und angesichts von Beziehungen zwischen diesen Werten, die sich aus dem allgemeinen Gasgesetz ergeben, und

- Anpassen des Gassensors (4) durch Anpassen des Signalverarbeitungsalgorithmus gemäß dem für jede Konstante bestimmten Wert.

6. System nach Anspruch 5, bei dem der Signalverarbeitungsalgorithmus ein Algorithmus mit einem Verstärkungsfaktor (K) zur linearen Anpassung ist, **dadurch gekennzeichnet, dass**

- das Steuergerät (7) zur Bestimmung eines Wertes für den Verstärkungsfaktor (K) auf Basis der Werte ($S_1$, $T_1$) der Messwertsätze und angesichts von Beziehungen zwischen diesen Werten, die sich aus dem allgemeinen Gasgesetz ergeben ist, eingerichtet ist,

- und das Steuergerät (7) zum Anpassen des Gassensors (4) durch den Verstärkungsfaktor (K) des Signalverarbeitungsalgorithmus, der zur Annahme des bestimmten Wertes veranlasst wird, eingerichtet ist.

7. Computerprogrammprodukt zum Anpassen eines elektrochemischen Gassensors (4), der sich in einer Abgasleitung (3) von einem Verbrennungsmotor (1) befindet, und der aufweist:

• eine Messkammer (5) zur Aufnahme einer Menge der die Abgasleitung passierenden Abgase,
• Messmittel (6) zum Erzeugen eines Messsignals, das von der Konzentration eines spezifischen Gases in der Menge der Abgase abhängt, und das mittels eines Signalverarbeitungsalgorithmus zu einem Wert gewandelt wird, der die Konzentration des Gases in den Abgasen repräsentiert, und
• ein Temperaturregelungsmittel (8), mit dem die Temperatur der Menge der Abgase geregelt werden kann

wobei das Computerprogrammprodukt einen Computerprogrammcode aufweist, um ein elektronisches Steuergerät zu veranlassen:

- Meßwertsätze zu drei oder mehr verschiedenen Zeitpunkten während einer Periode aufzuzeichnen, in der die Betriebsbedingungen des Verbrennungsmotors (1) so sind, dass die Zusammensetzung der von ihm freigesetzten Abgase im Wesentlichen unverändert bleibt, wobei jeder Messwertsatz einen ersten Wert ($S_1$) entspre-chend der Stärke des Messsignals zum Zeitpunkt der jeweiligen Aufzeichnung und einen zweiten Wert ($T_1$) entsprechend der Temperatur der Menge der Abgase zum Zeitpunkt der jeweiligen Aufzeichnung aufweist,
- das Temperaturregelungsmittel (8) so zu steuern, dass die Temperatur der Menge der Abgase zum Zeitpunkt jeder Aufzeichnung während der relevanten Periode unterschiedlich ist,
- einen Wert für eine oder mehrere Konstante zu bestimmen, die Teil des Signalverarbeitungsalgorithmus bilden, auf Basis der Werte ($S_1$, $T_1$) der Messwertsätze und angesichts von Beziehungen zwischen diesen Werten, die sich aus dem allgemeinen Gasgesetz ergeben, und
- den Gassensor (4) durch Anpassen des Signalverarbeitungsalgorithmus gemäß dem für jede Konstante bestimmten Wert anzupassen.

8. Computerprogrammprodukt nach Anspruch 7, **dadurch gekennzeichnet, dass** das Computerprogrammprodukt ein Datenspeichermedium aufweist, das von einer elektronischen Steuereinheit gelesen werden kann und auf dem der Computerprogrammcode gespeichert ist.

9. Elektronische Steuereinheit für ein Kraftfahrzeug, die ein Ausführungsmittel (21), einen mit dem Ausführungsmittel verbundenen Speicher (22) und ein Datenspeichermedium (24) aufweist, das mit dem Ausführungsmittel verbunden ist und auf dem der Computerprogrammcode eines Computerprogrammprodukts nach Anspruch 7 gespeichert ist.

**Revendications**

1. Procédé pour l'adaptation d'un capteur de gaz électrochimique (4) qui est situé dans une conduite d'échappement (3) d'un moteur à combustion interne (1) et qui comprend :

- une chambre de mesure (5) destinée à recevoir une certaine quantité du gaz d'échappement qui passe par la conduite d'échappement,
- un moyen de mesure (6) destiné à générer un signal de mesure qui dépend de la concentration d'un gaz spécifique dans ladite quantité de gaz d'échappement et qui est converti au moyen d'un algorithme de traitement du signal en une valeur qui représente la concentration dudit gaz dans les gaz d'échappement, et
- un moyen (8) de régulation de la température par lequel la température de ladite quantité de gaz d'échappement peut être régulée,

**caractérisé**

- **en ce que** des ensembles de valeurs mesurées sont enregistrés à trois instants différents, ou plus, pendant une période au cours de laquelle les conditions de fonctionnement du moteur (1) sont telles que la composition des gaz d'échappement s'échappant de ce dernier soit maintenue sensiblement inchangée, chacun de ces ensembles de valeurs mesurées comprenant une première valeur ($S_1$) correspondant à l'importance dudit signal de mesure à l'instant de l'enregistrement correspondant, et une deuxième valeur ($T_1$) correspondant à la tem-pérature de la quantité de gaz d'échappement à l'instant de l'enregistrement correspondant,
- **en ce que** ledit moyen (8) de régulation de la température est commandé de telle sorte que la température de ladite quantité de gaz d'échappement soit différente à l'instant de chaque enregistrement pendant la période considérée,
- **en ce qu'**une valeur correspondant à une ou plusieurs constantes qui font partie de l'algorithme de traitement du signal est déterminée sur la base des valeurs (Si, Ti) dans lesdits ensembles de valeurs mesurées et à la lumière de relations entre ces valeurs, qui découlent de la loi générale des gaz, et
- **en ce que** le capteur de gaz (4) est adapté par ajustement de l'algorithme de traitement du signal en fonction de la valeur déterminée pour chaque constante.

2. Procédé selon la revendication 1, dans lequel le capteur de gaz (4) comprend au moins un verrou de diffusion (10) par lequel ladite quantité de gaz d'échappement passe avant d'atteindre la chambre de mesure (5), **caractérisé en ce que** la température de ladite quantité de gaz d'échappement est régulée par ledit moyen (8) de régulation de la température, qui régule la température dans un ou plusieurs verrous de diffusion du capteur de gaz (4).

3. Procédé selon la revendication 1 ou 2, dans lequel l'algorithme de traitement du signal est un algorithme d'adaptation linéaire, qui possède un facteur d'amplification (K), **caractérisé,**

- **en ce qu'**une valeur dudit facteur d'amplification (K) est déterminée sur la base des valeurs (Si, Ti) dans lesdits ensembles de valeurs mesurées et à la lumière de la relation entre les valeurs mesurées qui est indiquée par la loi générale des gaz,
- et **en ce que** le capteur de gaz (4) est adapté par le fait que le facteur d'amplification (K) de l'algorithme de traitement du signal est amené à prendre ladite valeur déterminée.

4. Procédé selon l'une quelconque des revendications 1 à 3, **caractérisé en ce que** le capteur de gaz (4) est un capteur qui mesure la concentration de NO, $NO_2$, $N_2O$, $O_2$, $NH_3$ ou CO.

5. Système pour l'adaptation d'un capteur de gaz électrochimique (4) qui est situé dans une conduite d'échappement d'un moteur à combustion interne et qui comprend

- une chambre de mesure (5) destinée à recevoir une certaine quantité des gaz d'échappement qui passe par la conduite d'échappement,
- un moyen de mesure (6) destiné à générer un signal de mesure, qui dépend de la concentration d'un gaz spécifique dans ladite quantité de gaz d'échappement et qui est converti au moyen d'un algorithme de traitement du signal en une valeur qui représente la concentration dudit gaz dans les gaz d'échappement, et
- un moyen (8) de régulation de la température par lequel la température de ladite quantité de gaz d'échappement peut être régulée,

**caractérisé en ce que** le système comprend un dispositif de commande électronique (7) qui est agencé :

- pour enregistrer des ensembles de valeurs mesurées à trois instants différents ou plus, pendant une période au cours de laquelle les conditions de fonctionnement du moteur (1) sont telles que la composition des gaz d'échappement qui s'échappent de ce dernier soit maintenue sensiblement inchangée, chacun de ces ensembles de valeurs mesurées comprenant une première valeur ($S_1$) correspondant à l'importance dudit signal de mesure à l'instant de l'enregistrement correspondant, et une deuxième valeur ($T_1$) correspondant à la température de la quantité de gaz d'échappement à l'instant de l'enregistrement correspondant,
- pour commander ledit moyen (8) de régulation de la température de telle sorte que la température de ladite quantité de gaz d'échappement soit différente à l'instant de chaque enregistrement pendant la période considérée,
- pour déterminer une valeur d'une ou plusieurs constantes qui font partie de l'algorithme de traitement du signal sur la base des valeurs (Si, Ti) dans lesdits ensembles de valeurs mesurées et à la lumière de relations entre ces valeurs qui découlent de la loi générale des gaz, et
- pour adapter le capteur de gaz (4) par ajustement de l'algorithme de traitement du signal en fonction de la valeur déterminée pour chaque constante.

6. Système selon la revendication 5, dans lequel l'algorithme de traitement du signal est un algorithme d'adaptation linéaire qui possède un facteur d'amplification (K), **caractérisé**

- **en ce que** le dispositif de commande (7) est agencé pour déterminer une valeur dudit facteur d'amplification (K) sur la base des valeurs (Si,Ti) dans lesdits ensembles de valeurs mesurées et à la lumière de relations entre ces valeurs qui découlent de la loi générale des gaz,
- et **en ce que** le dispositif de commande (7) est agencé pour adapter le capteur de gaz (4) par le fait que le facteur d'amplification (K) de l'algorithme de traitement du signal est amené à prendre ladite valeur déterminée.

**7.** Produit de programme informatique pour l'adaptation d'un capteur de gaz électrochimique (4) qui est situé dans une conduite d'échappement (3) d'un moteur à combustion interne (1), et qui comprend :

- une chambre de mesure (5), destinée à recevoir une certaine quantité des gaz d'échappement qui passe par la conduite d'échappement,
- un moyen de mesure (6), destiné à générer un signal de mesure, qui dépend de la concentration d'un gaz spécifique dans ladite quantité de gaz d'échappement et qui est converti au moyen d'un algorithme de traitement du signal en une valeur qui représente la concentration dudit gaz dans les gaz d'échappement, et
- un moyen (8) de régulation de la température, par lequel la température de ladite quantité de gaz d'échappement peut être régulée,

lequel produit de programme informatique comprend un code de programme informatique destiné à amener le dispositif de commande électronique (7) :

- à enregistrer des ensembles de valeurs mesurées à trois instants différents ou plus pendant une période au cours de laquelle les conditions de fonctionnement du moteur (1) sont telles que la composition des gaz d'échappement qui s'échappent de ce dernier soit maintenue sensiblement inchangée, chacun de ces ensembles de valeurs mesurées comprenant une première valeur ($S_1$) correspondant à l'importance dudit signal de mesure à l'instant de l'enregistrement correspondant, et une deuxième valeur ($T_1$) correspondant à la température de la quantité de gaz d'échappement à l'instant de l'enregistrement correspondant,
- à commander ledit moyen (8) de régulation de la température de telle sorte que la température de ladite quantité de gaz d'échappement soit différente à l'instant de chaque enregistrement pendant la période considérée,
- à déterminer une valeur d'une ou plusieurs constantes qui font partie de l'algorithme de traitement du signal, sur la base des valeurs (Si, Ti) dans lesdits ensembles de valeurs mesurées et à la lumière de relations entre ces valeurs qui découlent de la loi générale des gaz, et
- à adapter le capteur de gaz (4) par ajustement de l'algorithme de traitement du signal en fonction de la valeur déterminée pour chaque constante.

**8.** Produit de programme informatique selon la revendication 7, **caractérisé en ce que** le produit de programme informatique comprend un support de stockage de données qui peut être lu par une unité de commande électronique et sur lequel est stocké ledit code de programme informatique.

**9.** Unité de commande électronique pour un véhicule à moteur, comprenant un moyen d'exécution (21), une mémoire (22) connectée au moyen d'exécution et un support de stockage de données (24) qui est connecté au moyen d'exécution et sur lequel est stocké le code de programme informatique d'un produit de programme informatique selon la revendication 7.

Fig 1

Fig 2

Fig 3

| Records sets of measured values | ~S1 |
| Determine values for constants | ~S2 |
| Adapts sensor | ~S3 |

Fig 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1365234 A